# EUROPÄISCHE PATENTSCHRIFT

(11) **EP 0 992 903 B1**
(45) Veröffentlichungstag und Bekanntmachung des Hinweises auf die Patenterteilung: **20.07.2005**
(21) Anmeldenummer: 99440232.9
(22) Anmeldetag: 20.08.1999
(51) Int. Cl.: G06F 9/46

(54) **Verfahren zur Durchführung von Kooperativem Multitasking in einem Nachrichtenübertragungsnetz und Netzelement dafür**
Method for implementing cooperative multitasking in a message transmission network and network element therefor
Méthode pour l'implémentation de traitement multitâche coopératif dans un réseau de transmission de messages et élément de réseau associé

(30) Priorität: 08.10.1998 DE 19846274
(43) Veröffentlichungstag der Anmeldung: 12.04.2000
(73) Patentinhaber: ALCATEL, 75008 Paris (FR)
(72) Erfinder: Schabernack, Jörg, 71665 Vaihingen/Enz (DE); Kocher, Hartmut Dr., 71229 Leonberg (DE); Klamt, Reimund, 71691 Freiberg (DE)
(74) Vertreter: Brose, Gerhard, Dipl.-Ing.

(56) Entgegenhaltungen:
- EP-A- 0 647 903
- FONG ET AL: "Time-Function Scheduling: A General Approach To Controllable Resource Management" IBM RESEARCH REPORT, SAN JOSE, CA, US, März 1995 (1995-03), Seiten A,1-25, XP002105419
- DAVIS R ET AL: "Dual priority scheduling" REAL-TIME SYSTEMS SYMPOSIUM, 1995. PROCEEDINGS., 16TH IEEE PISA, ITALY 5-7 DEC. 1995, LOS ALAMITOS, CA, USA,IEEE COMPUT. SOC, US, 5. Dezember 1995 (1995-12-05), Seiten 100-109, XP010159915 ISBN: 0-8186-7337-0

## Beschreibung

Im Bereich der digitalen Nachrichtenübertragungsnetze, insbesondere im Bereich der SDH-Netze (SDH: Synchrone Digitale Hierarchie), ist für jedes Netzelement eine Datenbank vorhanden, in der Daten über die aktuelle Netzkonfiguration gespeichert sind. Zur Verwaltung eines Netzelementes müssen mehrere Organisationsaufgaben, sogenannte "tasks", parallel abgearbeitet werden. Dazu werden Betriebssysteme, wie etwa UNIX oder MACH eingesetzt, die zur Abarbeitung der Organisationsaufgaben den Zugriff auf einen oder mehrere Prozessoren steuern, wobei sogenannte "threads" verwendet werden. Diese Betriebssysteme sind an sich bekannt und zahlreich beschrieben, z.B. in dem von A. Silberschatz et al. geschriebenen Fachbuch "Operating System Concepts", dritte Auflage, Kap. 4.2.3, Seiten 96-97, erschienen 1991 im Verlag Addison-Wesley, Reading, Massachusetts, USA. Mit Hilfe solcher Betriebssysteme wird der Zugriff von mehreren Organisationsaufgaben auf einen Prozessor, so gesteuert, daß für diejenige Organisationsaufgabe, die den Prozessor momentan beansprucht, entschieden wird, wann der Prozessor für die nächste Organisationsaufgabe frei gegeben wird. Für diese Art der Steuerung wird auch der Begriff "kooperatives Multitasking" verwendet. Die Reihenfolge, nach der die Organisationsaufgaben abgearbeitet werden, bestimmt ein Steuermodul, ein sogenannter "task scheduler".

In dem Artikel "Time-Function Scheduling: A General Approach to Controllable Resource Allocation" by L. Fong et al, IBM Research Report März 1995, Seiten A, 1-25, wird ein Verfahren zur Resourcenzuteilung beschrieben, das auf dem Konzept dynamischer Prioritäten basiert, welche für verschiedene Funktionsklassen in Abhängigkeit der Zeit verändert werden, die ein Job abwarten bis zur Ausführung muß.

Aus dem Artikel "Dual Priority Scheduling", R. Davis et al., Real-Time Systems Symposium 1995, Seiten 100-109, ist ein Verfahren zur Ablaufkoordination von Aufgaben mit weichen Zeitschranken in Echtzeitsystemen bekannt, deren Hauptfunktion in der Ausführung von Aufgaben mit harten Zeitschranken besteht. Dabei werden zwei verschiendene Arten von Prioritäten für die beiden Arten von Aufgaben vergeben. "Harte" Aufgaben haben eine Priorität in entweder einem oberen oder einem unteren Prioritätsbereich. Nach Ausführung einer harten Aufgabe wird deren Priorität in den unteren Prioritötsbereich versetzt und steigt nach einer fest vorgegebenen Zeit wieder in den oberen Prioritätsbereich auf. "Weiche" Aufgaben werden dagegen im mittleren Prioritätsbereich geführt.

Aus US 5,437,032 ist ein solches Steuermodul und ein Verfahren zur Durchführung von kooperativem Multitasking bekannt. Dort werden mehrere Organisationsaufgaben zu sogenannten "jobs" zusammengefaßt. Jedem "job" wird ein Gewicht entsprechend einer Priorität zugeordnet. Der Anteil an dem Gesamtgewicht aller "jobs" entspricht dem aktuellen Aktivitöts-Niveau ("actual level of multitasking activity"). Es wird ein gewünschtes Aktivitats-Niveou ("desired level of multitasking activity") definiert, das der maximalen Anzahl von Organisationsaufgaben entspricht, die gleichzeitig abgearbeitet werden können. Die Diskrepanz zwischen diesen beiden Niveaus wird herangezogen um die Reihenfolge zu bestimmen, nach der die "jobs" abgearbeitet werden. Solche "jobs", deren aktuelles Aktivitäts-Niveau stark von dem gewünschten abweicht, werden bevorzugt. Bei dem aus US 5,437,032 bekannten Verfahren kann der Fall auftreten, daß einzelne Organisationsaufgaben deshalb nicht abgearbeitet werden, weil deren "jobs" lediglich eine sehr geringe Diskrepanz haben und stets hinter diejenigen "jobs" zurückgestellt werden, die eine hohe Diskrepanz haben.

In dem Artikel "Management von SDH-Netzelementen: eine Anwendung der Informationsmodellierung" von M. P. Bosse et.al., erschienen in der von der Anmelderin publizierten Zeitschrift "Elektrisches Nachrichtenwesen", Ausgabe Nr. 4, 1993, auf Seiten 329 - 338 sind allgemein ein Verfahren und Vorrichtungen zum Verwalten von Netzelementen in digitalen Nachrichtenübertragungsnetzen beschrieben. Ein "task scheduler" wird dort jedoch nicht beschrieben.

Aufgabe der Erfindung ist es ein Verfahren und Vorrichtungen zur Durchführung von kooperativem Multitasking in einem Nachrichtenübertragungsnetz vorzuschlagen, die die eingangs genannten Nachteile nicht haben.

Gelöst wird die Aufgabe durch ein Verfahren mit den Merkmalen nach Anspruch 1 sowie durch ein Netzelement mit den Merkmalen nach dem nebengeordneten Anspruch 9.

Demnach werden jeder Organisationsaufgabe ein Zähler und ein Schwellenwert zugewiesen, wobei der Schwellenwert eine maximale Anzahl von Bearbeitungszyklen angibt, innerhalb derer die Organisationsaufgabe nicht sofort abgearbeitet muß, und wobei der Zähler diejenigen Bearbeitungszyklen zählt, innerhalb derer die Organisationsaufgabe nicht abgearbeitet wird. Zu Beginn eines jeden Bearbeitungszyklus wird geprüft, ob zumindest einer der Zähler den entsprechenden Schwellenwert übersteigt. Ist dies für eine einzige Organisationsaufgabe der Fall, so wird diese Organisationsaufgabe abgearbeitet und deren Zähler wird zurück gesetzt. Ist dies für mindestens zwei Organisationsaufgaben der Fall, so wird aus der Menge dieser Organisationsaufgaben gemäß mindestens einem Auswahlkriteriums eine Organisationsaufgabe ausgewählt. Dann wird diese abgearbeitet und ihr Zähler wird zurück gesetzt. Diejenigen Zähler, die den verbleibenden Organisationsaufgaben, d.h. den noch nicht abgearbeiteten Organisationsaufgaben, zugewiesen wurden, werden um einen Zählschritt erhöht. Der Bearbeitungszyklus wird erneut durchlaufen, falls festgestellt wird, daß zumindest noch eine der Organisationsaufgaben abzuarbeiten ist.

Dadurch wird erreicht, daß die Wartezeiten mittels der Zähler überwacht werden und diejenigen Organisationsaufgaben, die bereits mehr als eine durch den Schwellenwert vorgegebene Zeitdauer lang warten, bevorzugt abgearbeitet werden. Zudem wird auch ein Auswahlkriterium berücksichtigt, um dann die Reihenfolge vorzugeben, wenn aufgrund der Wartezeiten keine der Organisationsaufgaben zu bevorzugen ist.

Vorteilhafte Ausgestaltungen der Erfindung sind den Unteransprüchen zu entnehmen.

Demnach ist es besonders vorteilhaft, wenn das Auswahlkriterium ein Prioritätskriterium ist, gemäß dem geprüft wird, in welcher Reihenfolge die Organisationsaufgaben abgearbeitet werden. Dadurch wird erreicht, daß von den denjenigen Orgnisationsaufgaben, deren Zählerstände größer als die entsprechenden Schwellenwerte sind, zunächst die sehr wichtigen Organisationsaufgaben und dann die weniger wichtigen Organisationsaufgaben bearbeitet werden.

Vorteilhaft ist es auch, das Auswahlkriterium eine Zeitdauer ist, die angibt wie lange jede Organisationsaufgabe innerhalb einer Warteschleife verweilt, und gemäß der bestimmt wird, welche Organisationsaufgabe als nächste abgearbeitet wird. Die Reihenfolge der Bearbeitung wird also bestimmt durch die Position der Organisationsaufgaben innerhalb einer Warteschleife. Durch dieses sogenannte "round robin"-Prinzip kann sehr einfach in das Verfahren eingegliedert werden.

Außerdem ist es vorteilhaft, wenn jeder Schwellenwert eine Zahl ist, die höchstens um Eins geringer ist als die Anzahl N aller zu bearbeitenden Organisationsaufgaben, und wenn alle Schwellenwerte zumindest um Eins erhöht werden, falls eine weitere Organisationsaufgabe zu bearbeiten ist. Durch diese Maßnahmen wird sichergestellt, daß alle Organisationsaufgaben, die sich zur Bearbeitung angemeldet haben, vom dem kooperativen Multitasking profitieren und innerhalb einer möglichst kurzen Zeitspanne abgearbeitet werden.

Wenn der Fall auftritt, daß die Anzahl N um Eins (N' = N+1) steigt, weil die weitere Organisationsaufgabe sich für die Bearbeitung anmeldet hat, dann ist es besonders vorteilhaft, wenn nur diejenigen Schwellenwerte um Eins erhöht werden, die kleiner oder gleich N-1 sind. Dadurch wird erreicht, daß alle Organisationsaufgaben innerhalb von möglichst wenigen Bearbeitungszyklen bearbeitet werden.

Von besonderem Vorteil ist es auch, wenn eine einzelne Organisationsaufgabe nur dann berücksichtigt wird, wenn ein Ereignis auftritt, das die Bearbeitung dieser Organisationsaufgabe erforderlich macht. Das bedeutet, daß spezielle Organisationsaufgaben solange zurückgestellt werden können, bis zu erwartende Ereignisse eintreten, die die Bearbeitung dieser speziellen Organisationsaufgaben erforderlich machen. Beispielsweise können Systemwarnungen oder Notalarme auftreten, für die spezielle Organisationsaufgaben bereit gehalten werden. Diese Organisationsaufgaben werden bis zum Eintritt der Ereignisse von der Bereitschaft zur Bearbeitung suspendiert. Auf diese sehr einfache Art und Weise wird das Verfahren auf eine größere Menge von Organisationsaufgaben erstreckt, ohne daß diese speziellen Organisationsaufgaben ständig verwaltet werden müssen und das Steuermodul ("task scheduler") zusätzlich belastet wird.

Das Verfahren gestaltet sich auch dann besonders vorteilhaft, wenn eine Organisationsaufgabe nur dann als eine zu bearbeitende Organisotionsoufgabe berücksichtigt wird, sobald ein vorgebbares Zeitintervall abgelaufen ist. Das bedeutet, daß die Organisationsaufgabe bis zum Ablauf des Zeitintervalls deaktiviert wird. Das Ereignis ist beispielsweise der Ablauf eines vorgebbaren Wartungsintervalls und die Organisationsaufgabe erledigt eine Wartungsroutine.

Im weiteren wird die Erfindung anhand eines Ausführungsbeispiels und unter Zuhilfenahme der folgenden Zeichnungen beschrieben:
- Fig. 1,: die schematisch die Struktur eines Netzelementes mit einem Steuermodul zeigt; und
- Fig. 2,: die das Ablaufdiagramm eines Multitasking-Verfahrens zeigt, das das Steuermodul steuert.

Zur Vereinfachung der folgenden Beschreibung des Ausführungsbeispiels werden die Organisationsaufgaben auch kurz als "Aufgaben" oder "tasks" bezeichnet.

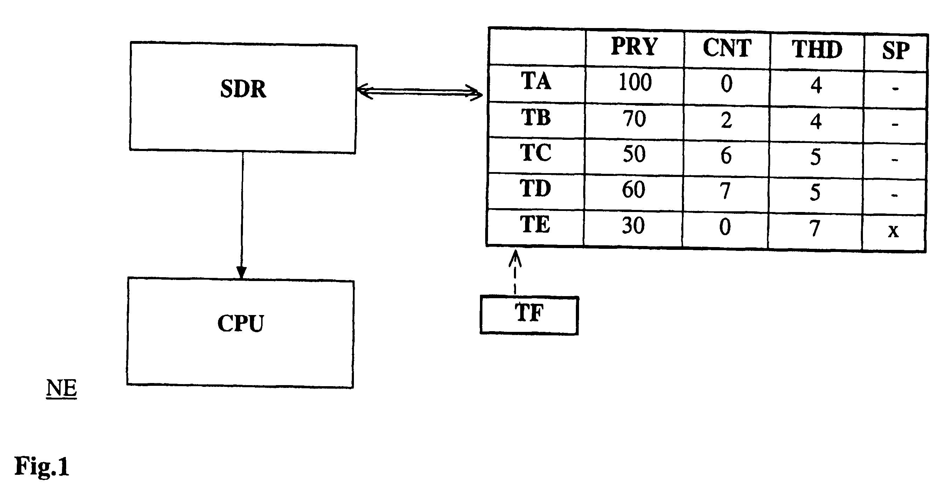

In Figur 1 ist der Aufbau eines Netzelementes NE für ein digitales Nachrichtenübertragungsnetz schematisch dargestellt. Das Netzelement NE enthält einen Prozessor CPU und ein Steuermodul SDR zur Durchführung von kooperativen Multitasking, bei dem der Prozessor Aufgaben gemäß einer Reihenfolge abarbeitet, die das Steuermodul bestimmt. Dazu greift das Steuermodul zu auf einen nicht dargestellten Speicher, in dem eine Liste abgespeichert ist. Die Liste ist in Fig. 1 schematisch dargestellt. In ihr werden nur solche Aufgaben eingetragen, die sich zur Bearbeitung angemeldet haben. Einzelne Aufgaben können zeitweise oder ereignisbedingt deaktiviert werden.

Wie es in Figur 1 zu sehen ist, sind in der Liste für die Aufgaben TA, TB, TC, TD und TE jeweils drei verschiedene Parameter eingetragen. Der erste Parameter PRY gibt an mit welcher Priorität die jeweilige Aufgabe abgearbeitet werden soll. Der zweite Parameter CNT ist ein Zähler, der mit jedem Durchlauf des Bearbeitungszyklus um Eins erhöht wird. Für jede der Aufgaben gibt der Zähler also an, wieviel Bearbeitungszyklen bereits durchlaufen wurden, ohne daß diese Aufgabe abgearbeitet werden konnte. Beispielsweise wartet die Aufgabe TB bereits zwei Bearbeitungszyklen lang (CNT=2) darauf, abgearbeitet zu werden. Der dritte Parameter THD ist ein Schwellenwert, der vorgeben wird und der eine maximale Anzahl von Bearbeitungszyklen angibt, innerhalb derer die Aufgabe nicht abgearbeitet zu werden braucht. Beispielsweise wurde der Aufgabe TD ein Schwellenwert von THD=5 zugewiesen. Das heißt, es kann 5 Bearbeitungszyklen lang gewartet werden, bis die Aufgabe TD abgearbeitet werden sollte.

Die tasks TA bis TD sind aktiv, d.h. zur Bearbeitung angemeldet. Die task TE ist jedoch inaktiv, d.h. nicht angemeldet und von der Bearbeitung suspendiert. Der Status "aktiv" oder inaktiv" wird innerhalb der Liste durch ein flag SP angezeigt.

Wie der Figur 1 zu entnehmen ist, wurde der Aufgabe TA die Priorität PRY=100 und der Schwellenwert THD=4 zugewiesen. Der Zähler hat den momentanen Zählerstand CNT=0. Das bedeutet, daß die Aufgabe TA noch fünf Bearbeitungszyklen lang warten kann, bis der Zähler CNT den Schwellenwert THD übersteigt. Erst dann ist angezeigt, daß die Aufgabe TA möglichst rasch abgearbeitet werden sollte. Die Reihenfolge, in der die Aufgaben abgearbeitet werden, richtet sich dann nach der Höhe der Priorität PRY. Für die Aufgabe TB sind in der Liste folgende Eintröge zu finden: PRY=70, CNT=2 und THD=4. Die Einträge für die Aufgabe TC sind folgende : PRY=50, CNT=6 und THD=5. Für die task TD findet man folgende Einträge in der Liste: PRY=60, CNT=7 und THD= 5. Und für die Aufgabe TE sind die Parameter PRY=30, CNT=0 und THD=5 eingetragen. Das bedeutet, daß bei den Aufgaben TA und TB die Zähler CNT den entsprechenden Schwellenwert THD noch nicht überschritten haben. Der Zähler für die task TE ist auch unterhalb des Schwellenwertes und hat den Zählerstand "0". Für diese task TE bleibt der Zähler solange auf Null, wie diese task deaktiviert ist. Daß die task TE deaktiviert ist, zeigt das flag SP an. Die Zähler der Aufgaben TC und TD haben den entsprechenden Schwellenwert bereits überschritten und müssen möglichst rasch abgearbeitet werden.

Dadurch, daß die Aufgabe TD eine höhere Priorität PRY als die Aufgabe TC hat, wird TD zunächst abgearbeitet. Am Ende des Bearbeitungszyklus wird der Zähler der Aufgabe TD auf Null gesetzt und es werden die Zähler der anderen Aufgaben TA, TB, und TC um Eins erhöht. Jedoch bleibt der Zähler für die task TE unverändert auf dem Stand Null solange, bis diese task TE durch ein Ereignis aktiviert wird.

Die in Figur 1 angegebenen tasks TA bis TE haben sich zur Bearbeitung angemeldet und werden von dem Netzelement NE durchgeführt, um Übertragungen in einem SDH-Nachrichtenübertragungsnetz zu steuern oder zu überwachen. Eine jede task bedient sich eines oder mehrerer sogenannter "management objects" entsprechend einem Verfahren, wie es an sich bekannt ist aus dem Artikel "Management von SDH-Netzelementen: Eine Anwendung der Informationsmodulierung" von M. P. Bosse et al., erschienen in der von der Anmelderin publizierten Zeitschrift "Elektrisches Nachrichtenwesen", Ausgabe Nr.4, 1993, Seiten 329 bis 338.

In Figur 1 ist außerdem eine task TF dargestellt, die zu der dort gezeigten Liste hinzugefügt werden soll. Dazu werden dieser task TF die Parameter PRY, CNT und THD zugewiesen. Bei einer solchen Erweiterung der Liste werden die Schwellenwerte THD an die Anzahl N aller zu bearbeitenden Aufgaben angepaßt. Es sollte vorzugsweise darauf geachtet werden, daß ein jeder Schwellenwert höchstens um Eins geringer ist als die Anzahl aller zu bearbeitenden Aufgaben (THD ≥ N-1). In dem hier beschriebenen Beispiel beträgt die Anzahl aller task TA bis TE gleich 5 (N=5) und wird bei Hinzufügen der task TE auf 6 (N'=6) erhöht.

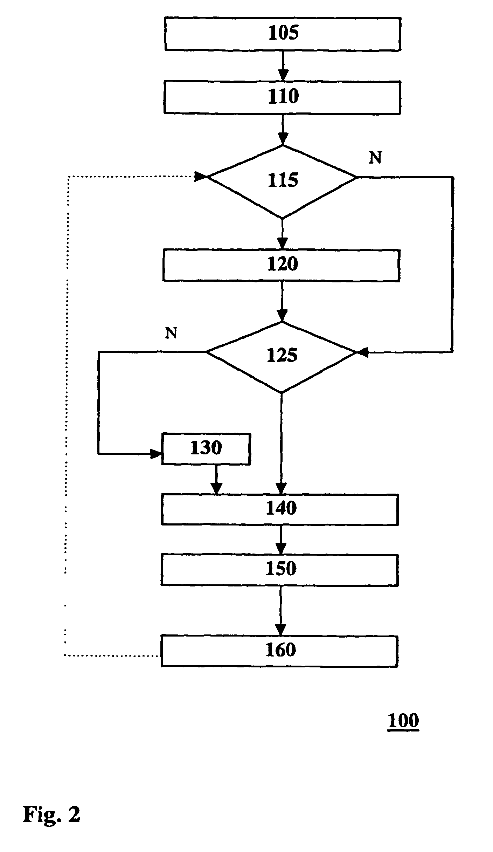

Das von dem in Figur 1 dargestellten Netzelement durchgeführte Verfahren wird im folgenden näher anhand der Figur 2 beschrieben:

Die Figur 2 zeigt schematisch ein Ablaufdiagramm eines Verfahrens 100 zur Durchführung von kooperativem Multitasking. Das Verfahren umfaßt die Schritte 105 bis 160. In dem ersten Schritt 105 wird eine Vorselektion dahingehend getroffen, daß nur solche Aufgaben berücksichtigt werden, die sich angemeldet haben, d.h. die momentan vom Netzelement verwaltet werden. In diesem Beispiel sind es alle die in Fig. 1 dargestellten Aufgaben TA bis TE. In einem nächsten Schritt 110 wird zu jeder Aufgabe der Zähler CNT und der Schwellenwert THD gesetzt. Außerdem wird jeder Aufgabe eine Priorität PRY zugewiesen. Diese Parameter werden in die in Fig. 1 dargestellte Liste eingetragen. Wie es bereits anhand von Fig.1 beschrieben wurde, hat die Aufgabe TA folgende Parameter: PRY= 100, CNT=0 und THD=4. Auch den anderen Aufgaben TB bis TE werden Parameter entsprechend der in Fig. 1 gezeigten Liste zugeteilt.

Dann wird in einem nächsten Schritt 115 für eine jede Aufgabe abgefragt, ob deren Zähler CNT den Schwellenwert THD überschreitet. In diesem Beispiel überschreitet der Zähler der Aufgabe TC den entsprechenden Schwellenwert. Gleiches gilt für den Zähler der Aufgabe TD. Durch diese Abfrage wird eine weitere Auswahl getroffen, nach der in einem nächsten Schritt 120 nur diejenigen Aufgaben, die dieses Kriterium erfüllen, berücksichtigt werden. In diesem Beispiel sind es die Aufgaben TC und TD, die bearbeitet werden müssen.

Um nun eine Rangfolge festzulegen, wird in einem nachfolgenden Schritt 125 geprüft, ob die Prioritäten PRY dieser beiden Aufgaben TC und TD voneinander abweichen. Ist dies der Fall, so wird eine nicht dargestellte Prioritätsliste erstellt. In diesem Beispiel wird die Aufgabe TD zuerst in die Prioritätsliste eingetragen, da ihre Priorität PRY=60 größer ist als die Priorität der Aufgabe TC (PRY=50). Demnach wird die Aufgabe TD bevorzugt abgearbeitet in einem Schritt 140.

Falls jedoch die Prioritäten gleich groß sein sollten, wird das Bearbeiten der tasks nach den an sich bekannten "round robin"-Verfahren durchgeführt. Das bedeutet, daß die Reihenfolge der Abarbeitung bestimmt ist durch die zeitliche Rangfolge, nach der die tasks in die Liste eingetragen worden sind. Diese Rangfolge wird in einem Schritt 130 durchgeführt. Dann wird die bevorzugte task in dem Schritt 140 abgearbeitet. Das "round robin"-Verfahren an sich ist etwa in dem Buch von H. M. Deitel "An Introduction to Operating System" beschrieben in dem Kap. 10.10 (zweite Auflage 1990, Verlag Addison-Wesley, Reading, Massachusetts, USA).

Diejenige Augabe, die von den angemeldeten Aufgaben zu bevorzugen ist, hier zunächst die task TD, wird also in dem Schritt 140 abgearbeitet, wobei nach dem Bearbeiten deren Zähler CNT auf Null zurückgesetzt wird. Dann folgt in einem weiteren Schritt 150 das Erhöhen derjenigen Zähler, die den anderen noch nicht abgearbeiteten tasks zugewiesen wurden. Diese Zähler werden jeweils um Eins erhöht. Andere nicht angemeldete oder suspendierte tasks werden nur dann abgearbeitet, wenn keine task, deren Schwellenwert größer Null ist, mehr vorkommt.

Danach folgt der Schritt 160, bei dem das ordnungsgemäße Abarbeiten der tasks überprüft wird, und dann ein Rücksprung auf den Schritt 115. Damit schließt sich der Bearbeitungszyklus für eine task. Dann beginnt mit dem Schritt 115 der Bearbeitungszyklus für die nächste task. Dazu wird wiederum geprüft, ob einzelne Zähler größer als die entsprechenden Schwellenwerte sind. Sollte einmal im Schritt 115 festgestellt werden, daß keiner der Zähler den entsprechenden Schwellenwert überschreitet, so wird sofort der Schritt 125 durchgeführt, wonach die Unterschiede der Prioritäten geprüft wird, um die Prioritätsliste zu erstellen. Sollte auch in diesem Schritt 125 festgestellt werden, daß alle Prioritäten gleich sind, so wird der Schritt 130 durchgeführt, wonach die tasks entsprechend dem "round robin"-Prinzip weiter bearbeitet werden.

Das beschriebene Verfahren 100 stellt sicher, daß auch dann alle zu bearbeitenden Aufgaben vom Netzelement bearbeitet werden, wenn einzelne eine sehr hohe Priorität haben. Tasks mit hohen Prioritäten können die Bearbeitung von tasks mit sehr niedrigen Prioritäten nicht blockieren. Somit könnte man die nach dem beschriebenen Verfahren durchgeführte Funktion des Netzelementes als "fair scheduler" bezeichnen. Falls alle Prioritäten gleich hoch sind, wird nach dem an sich bekannten "round robin"-Verfahren abgearbeitet. Damit wird die Abarbeitung der Aufgaben den drei verschiedenen Kriterien, nämlich der Wartedauer (repräsentiert durch den Zählerstand CNT), der Priorität (repräsentiert durch den Prioritätsparameter PRY) und der Einordnung innerhalb der Bearbeitungsschleife ("round robin"-Prinzip) durchgeführt.

Das Kriterium der Wartedauer hat Vorrang vor dem Prioritätskriterium und dieses wiederum hat Vorrang vor dem "round robin"-Prinzip. Es ist denkbar, das Verfahren derart abzuwandeln, daß eine andere Rangordnung der Kriterien gewählt wird. Beispielsweise könnte das Prioritätskriterium Vorrang hoben vor dem Kriterium der Wartezeitdauer und vor dem "round robin"-Kriterium. Es ist auch denkbar, die Prüfungen weiterer Kriterien mit in das Verfahren einzubauen.

Das beschriebene Verfahren ist besonders geeignet zum Einsatz innerhalb eines SDH-Netzelementes, um ein "fair scheduling" durchzuführen. Daneben sind auch andere Anwendungsfälle denkbar, bei denen bislang ein herkömmlicher "task scheduler" verwendet wurde. Deshalb ist die Erfindung besonders für den Einsatz in mit Unix oder MACH betriebenen Systemen eingesetzt zu werden.

## Patentansprüche

1. Verfahren (100) zur Durchführung von kooperativem Multitasking in einem rechnergesteuertem Netzelement eines digitalen Nachrichtenübertragungsnetzes, bei dem Organisationsaufgaben (TA bis TE) gemäß einer Reihenfolge abgearbeitet werden, mit folgenden Schritten:
- jeder Organisationsaufgabe (TA bis TE) werden ein Zähler (CNT) und ein Schwellenwert (THD) zugewiesen, wobei der Schwellenwert (THD) eine Anzahl von Bearbeitungszyklen angibt, innerhalb derer die Organisationsaufgabe nicht sofort abgearbeitet muß, und wobei der Zähler (CNT) diejenigen Bearbeitungszyklen zählt, innerhalb derer die Organisationsaufgabe nicht abgearbeitet wird (Schritt 110);
- zu Beginn eines jeden Bearbeitungszyklus wird geprüft, ob zumindest einer der Zähler (CNT) den entsprechenden Schwellenwert (THD) übersteigt (Schritt 115);
- ist dies der Fall, so wird gemäß mindestens einem Auswahlkriterium (PRY) von den entsprechenden Organisationsaufgaben (TC, TD) eine (TD) ausgewählt und abgearbeitet und deren Zähler (CNT) wird zurück gesetzt (Schritte 125 bis 140);
- diejenigen Zähler, die den verbleibenden Organisationsaufgaben (TA, TB, TC) zugewiesen wurden, werden um einen Zählschritt erhöht (Schritt 150);
- der Bearbeitungszyklus (Schritte 115 bis 150) wird erneut durchlaufen, falls festgestellt wird, daß zumindest noch eine (TA-TE) der Organisationsaufgaben abzuarbeiten ist (Schritt 160).

2. Verfahren (100) nach Anspruch 1, bei dem
das Auswahlkriterium ein Prioritätskriterium (PRY) ist, gemäß dem geprüft wird, in welcher Reihenfolge die Organisationsaufgaben (TA bis TE) abgearbeitet werden (Schritt 125).

3. Verfahren nach Anspruch 1, bei dem
das Auswahlkriterium die Zeitdauer ist, die angibt wie lange jede Organisationsaufgabe innerhalb einer Warteschleife verweilt, und gemäß der bestimmt wird, welche Organisationsaufgabe als nächste abgearbeitet wird (Schritt 130).

4. Verfahren nach Anspruch 1, bei dem
jeder Schwellenwert (THD) eine Zahl ist, die höchstens um Eins geringer ist als die Anzahl aller zu bearbeitenden Organisationsaufgaben (TA bis TE), und bei dem alle Schwellenwerte zumindest um Eins erhöht werden, falls eine weitere zu bearbeitende Organisationsaufgabe (TF) hinzukommt (Schritt 105).

5. Verfahren nach Anspruch 1, bei dem
die Anzahl der Organisationsaufgaben um Eins erhöht wird, falls eine weitere Organisationsaufgabe sich für die Bearbeitung anmeldet, und bei dem dann nur diejenigen Schwellenwerte um Eins erhöht werden, die kleiner oder gleich der erhöhten Anzahl sind.

6. Verfahren nach Anspruch 1, bei dem
alle Schwellenwerte nur dann erhöht werden, wenn ein Ereignis auftritt, das die Bearbeitung der weiteren Organisationsaufgabe (TF) erfordert (Schritt 105).

7. Verfahren (100) nach Anspruch 1, bei dem
eine einzelne Organisationsaufgabe (TE) nur dann berücksichtigt wird, wenn ein Ereignis auftritt, das die Bearbeitung dieser Organisationsaufgabe erforderlich macht.

8. Verfahren nach Anspruch 1, bei dem
eine Organisationsaufgabe nur dann als eine zu bearbeitende Organisationsaufgabe berücksichtigt wird, sobald ein vorgebbares Zeitintervall abgelaufen ist.

9. Netzelement (NE) für ein digitales Nachrichtenübertragungsnetz mit mindestens einem Prozessor (CPU) und einem Steuermodul (SDR) zur Durchführung von kooperativem Multitasking, bei dem der Prozessor Organisationsaufgaben (TA bis TE) gemäß einer Reihenfolge abgearbeitet, die das Steuermodul (SDR) bestimmt, bei dem zur Bestimmung der Reihenfolge das Steuermodul (SDR) jeder Organisationsaufgabe (TA bis TE) einen Zähler (CNT) und einen Schwellenwert (THD) zuweist, wobei der Schwellenwert (THD) eine Anzahl von Bearbeitungszyklen angibt, innerhalb derer die Organisationsaufgabe nicht sofort abgearbeitet muß, und wobei der Zähler (CNT) diejenigen Bearbeitungszyklen zählt, innerhalb derer die Organisationsaufgabe nicht abgearbeitet wird, bei dem das Steuermodul (SDR) zu Beginn des Bearbeitungszyklus prüft, ob zumindest einer der Zähler (CNT) den entsprechenden Schwellenwert (THD) übersteigt, und, falls dies der Fall ist, der Prozessor (CPU) gemäß mindestens einem Auswahlkriterium (PRY) von den entsprechenden Organisationsaufgaben (TC, TD) eine (TD) auswählt und abarbeitet, bei dem das Steuermodul (SDR) deren Zähler (CNT) zurück setzt und zum Ende des Betriebs-zyklus diejenigen Zähler, die den anderen Organisationsaufgaben (TA, TB, TC, TE) zugewiesen wurden, um einen Zählschritt erhöht, und bei dem das Steuermodul (SDR) einen erneuten Durchlauf des Betriebs-zyklus steuert, falls es feststellt, daß zumindest noch eine der Organisationsaufgaben abzuarbeiten ist.

10. Netzelement nach Anspruch 9, bei dem
mehrere untereinander verbundenen Prozessoren auf mehrere Datenbanken zugreifen, um die Organisationsaufgaben gemäß einem kooperartiven Multitasking abzuarbeiten, und bei dem einer der Prozessoren auf das Steuermodul zugreift, um die Reihenfolge zur Abarbeitung der Organsationsaufgaben zu bestimmen.

## Claims

1. Method (100) for executing cooperative multitasking in a computer-controlled network element of a digital message transfer network, in which organisational tasks (TA to TE) are processed according to a sequence, with the following steps:
- each organisational task (TA to TE) is assigned a counter (CNT) and a threshold value (THD), the threshold value (THD) specifying a number of processing cycles within which the organisational task does not have to be processed immediately, and the counter (CNT) counting those processing cycles within which the organisational task is not processed (step 110);
- at the beginning of each processing cycle it is checked whether at least one of the counters (CNT) exceeds the relevant threshold value (THD) (step 115);
- if this is the case, then according to at least one selection criterion (PRY) one (TD) of the corresponding organisational tasks (TC, TD) is selected and processed and its counter (CNT) is reset (steps 125 to 140);
- the counters that were assigned to the remaining organisational tasks (TA, TB, TC) are incremented by one counting step (step 150);
- the processing cycle (steps 115 to 150) is run through again if it is established that at least one more of the organisational tasks (TA-TE) is to be processed (step 160).

2. Method (100) according to claim 1, in which the selection criterion is a priority criterion (PRY), according to which the order in which the organisational tasks (TA to TE) are processed is checked (step 125).

3. Method according to claim 1, in which the selection criterion is the time, which indicates how long each organisational task dwells within a waiting loop, and according to which it is determined which organisational task is next to be processed (step 130).

4. Method according to claim 1, in which each threshold value (THD) is a number that is smaller by a maximum of one than the number of all organisational tasks (TA to TE) to be processed, and in which all threshold values are incremented at least by one if a further organisational task (TF) to be processed is added (step 105).

5. Method according to claim 1, in which the number of organisational tasks is incremented by one if a further organisational task logs on for processing, and in which only those threshold values that are smaller than or equal to the increased number are then incremented by one.

6. Method according to claim 1, in which all threshold values are only incremented if an event occurs that necessitates the processing of the further organisational task (TF) (step 105).

7. Method (100) according to claim 1, in which an individual organisational task (TE) is only taken into account if an event occurs that makes the processing of this organisational task necessary.

8. Method according to claim 1, in which an organisational task is only taken into account as an organisational task to be processed as soon as a specifiable time interval has expired.

9. Network element (NE) for a digital message transfer network with at least one processor (CPU) and a control module (SDR) for executing cooperative multitasking, in which the processor processes organisational tasks (TA to TE) according to a sequence that is determined by the control module (SDR), in which to determine the sequence the control module (SDR) assigns each organisational task (TA to TE) a counter (CNT) and a threshold value (THD), the threshold value (THD) indicating a number of processing cycles within which the organisational task does not have to be processed immediately, and the counter (CNT) counting those processing cycles within which the organisational task is not processed, in which the control module (SDR) checks at the beginning of the processing cycle whether at least one of the counters (CNT) exceeds the corresponding threshold value (THD) and, if this is the case, the processor (CPU) selects and processes one (TD) from the corresponding organisational tasks (TC, TD) according to at least one selection criterion (PRY), in which the control module (SDR) resets its counter (CNT) and at the end of the operating cycle increments those counters assigned to the other organisational tasks (TA, TB, TC, TE) by one counting step, and in which the control module (SDR) controls a fresh run-through of the operating cycle if it establishes that at least one more of the organisational tasks is to be processed.

10. Network element according to claim 9, in which several processors linked to one another access several databases to process the organisational tasks according to cooperative multitasking, and in which one of the processors accesses the control module to determine the order for processing the organisational tasks.

## Revendications

1. Procédé (100) pour l'implémentation de traitement multitâche coopératif dans un élément de réseau commandé par ordinateur dans un réseau de transmission de messages numérique, dans lequel des tâches d'organisation (TA à TE) sont exécutées selon un ordre successif, comprenant les étapes suivantes :
- un compteur (CNT) et un seuil (THD) sont attribués à chaque tâche d'organisation (TA à TE), le seuil (THD) indiquant un nombre de cycles de traitement à l'intérieur duquel la tâche d'organisation ne doit pas être exécutée immédiatement et le compteur (CNT) comptant les cycles de traitement à l'intérieur desquels la tâche d'organisation n'est pas exécutée (étape 110) ;
- au début de chaque cycle de traitement, il est contrôlé si au moins l'un des compteurs (CNT) dépasse le seuil correspondant (THD) (étape 115) ;
- si c'est le cas, une tâche (TD) est sélectionnée parmi les tâches d'organisation correspondantes (TC, TD) selon au moins un critère de sélection (PRY) et exécutée et son compteur (CNT) est remis à zéro (étapes 125 à 140) ;
- les compteurs qui ont été affectés aux tâches d'organisation subsistantes (TA, TB, TC) sont incrémentés d'une unité de comptage (étape 150) ;
- le cycle de traitement (étapes 115 à 150) est réalisé une nouvelle fois s'il est constaté qu'au moins l'une des tâches d'organisation (TA à TE) doit encore être exécutée (étape 160).

2. Procédé (100) selon la revendication 1, dans lequel le critère de sélection est un critère de priorité (PRY) selon lequel il est contrôlé dans quel ordre successif les tâches d'organisation (TA à TE) sont exécutées (étape 125).

3. Procédé selon la revendication 1, dans lequel le critère de sélection est la durée qui indique le temps pendant lequel chaque tâche d'organisation patiente dans une file d'attente et selon laquelle il est déterminé quelle tâche d'organisation est exécutée à l'étape suivante (étape 130).

4. Procédé selon la revendication 1, dans lequel chaque seuil (THD) est un nombre qui est au maximum inférieur d'une unité au nombre de toutes les tâches d'organisation à exécuter (TA à TE), et dans lequel tous les seuils sont incrémentés au moins d'une unité si une tâche d'organisation supplémentaire à exécuter (TF) est ajoutée (étape 105).

5. Procédé selon la revendication 1, dans lequel le nombre de tâches d'organisation est augmenté d'une unité si une tâche d'organisation supplémentaire se signale pour l'exécution, et dans lequel seuls sont ensuite incrémentés d'une unité les seuils qui sont inférieurs ou égaux au nombre incrémenté.

6. Procédé selon la revendication 1, dans lequel tous les seuils sont uniquement incrémentés lorsqu'il se produit un événement qui requiert l'exécution de la tâche d'organisation supplémentaire (TF) (étape 105).

7. Procédé (100) selon la revendication 1, dans lequel une tâche d'organisation particulière (TE) est uniquement prise en considération lorsqu'il se produit un événement qui rend indispensable l'exécution de cette tâche d'organisation.

8. Procédé selon la revendication 1, dans lequel une tâche d'organisation est uniquement considérée comme une tâche d'organisation à exécuter lorsqu'un intervalle de temps pouvant être prédéterminé s'est écoulé.

9. Élément de réseau (NE) pour un réseau de transmission de messages numérique ayant au moins un processeur (CPU) et un module de commande (SDR) pour l'implémentation d'un traitement multitâche coopératif, où le processeur exécute des tâches d'organisation (TA à TE) selon un ordre que détermine le module de commande (SDR), où le module de commande (SDR) affecte à chaque tâche d'organisation (TA à TE) un compteur (CNT) et un seuil (THD) aux fins de la définition de l'ordre, le seuil (THD) indiquant un nombre de cycles de traitement à l'intérieur duquel la tâche d'organisation ne doit pas être exécutée immédiatement et le compteur (CNT) comptant les cycles de traitement à l'intérieur desquels la tâche d'organisation n'est pas exécutée, où le module de commande (SDR) contrôle au début du cycle de traitement si au moins l'un des compteurs (CNT) dépasse le seuil (THD) correspondant et, si c'est le cas, le processeur (CPU) sélectionne une tâche (TD) parmi les tâches d'organisation correspondantes (TC, TD) selon au moins un critère de sélection et l'exécute, où le module de commande (SDR) remet à zéro son compteur (CNT) et, à la fin du cycle de fonctionnement, incrémente d'une unité de comptage les compteurs qui ont été affectés aux autres tâches d'organisation (TA, TB, TC, TE), et où le module de commande (SDR) commande un nouveau déroulement du cycle de fonctionnement s'il constate qu'au moins l'une des tâches d'organisation doit encore être exécutée.

10. Élément de réseau selon la revendication 9, dans lequel plusieurs processeurs montés en série accèdent à plusieurs banques de données afin d'exécuter les tâches d'organisation selon un traitement multitâche coopératif, et dans lequel l'un des processeurs accède au module de commande afin de déterminer l'ordre de l'exécution des tâches d'organisation.
